# DEMANDE DE BREVET EUROPEEN

(11) **EP 0 549 385 A1**
(43) Date de publication de la demande: **30.06.1993**
(21) Numéro de dépôt: 92403132.1
(22) Date de dépôt: 20.11.1992
(51) Int. Cl.: B23K 37/04

(54) **Procédé et dispositif d'assemblage de deux pièces par soudure**

(30) Priorité: 20.12.1991 FR 9115952
(71) Demandeur: SOCIETE EUROPEENNE DE SEMI-REMORQUES - SESR -, F-91035 Evry Cédex (FR)
(72) Inventeur: Detienne, Gilles, F-89250 Gurgy (FR)
(74) Mandataire: Michelet, Alain

(57) **Abrégé**

Le procédé est caractérisé en ce qu'on applique sur les pièces à assembler (1, 2), durant l'opération de soudage, des précontraintes tendant à maintenir lesdites pièces dans leur forme actuelle.

Le dispositif comprend des organes de bridage à griffe 9 pour appliquer l'une des pièces (2) sur une surface d'appui (8a), et un organe (10) de centrage et d'application de la deuxième pièce (1) sur la première pièce (2).

## Description

La présente invention concerne un procédé et un dispositif d'assemblage de deux pièces par soudure.

L'assemblage par soudure de pièces pré-usinées ayant des formes et des inerties différentes, occasionne généralement des déformations dimensionnelles ou de planéité desdites pièces, qui rendent ledit assemblage inapte à l'emploi sans un redressage ou un usinage complémentaire.

L'invention remédie à cet inconvénient et a notamment pour but de proposer un procédé d'assemblage par soudure de deux pièces de formes différentes (en particulier une pièce en forme de coupelle et une deuxième pièce en forme de tôle plane), procédé qui permette que, après soudure, le sous-ensemble réalisé puisse être utilisé tel quel sans opération d'usinage complémentaire, dans un ensemble de composants usinés répondant à des tolérances précises.

Ce but est atteint conformément à l'invention, du fait que, durant l'opération de soudage, on applique sur les pièces à assembler, des précontraintes tendant à les maintenir dans leur forme actuelle.

Selon un aspect de l'invention, on applique l'une des pièces à assembler, avec précontrainte, sur une paroi rigide et fixe de maintien, et on applique l'autre pièce sur la première pièce, également avec précontrainte.

Dans le cas où la deuxième pièce est une pièce ayant une forme creuse par exemple une forme de coupelle, on centre cette pièce sur la première pièce, en lui appliquant sur sa face interne des forces régulièrement reparties et dirigées radialement vers l'extérieur.

L'invention concerne également un dispositif d'assemblage par soudure de deux pièces, caractérisé en ce qu'il comporte un bâti, des moyens de bridage avec précontrainte de la première pièce à assembler, sur le bâti et des moyen de positionnement et d'application avec contrainte de la deuxième pièce sur la première pièce.

Avantageusement, les moyens de bridage comprennent une pluralité de griffes susceptibles de coopérer avec des évidements de la première pièce pour appliquer cette dernière avec précontrainte contre une paroi rigide et fixe de maintien solidaire du bâti.

Avantageusement, dans le cas où la deuxième pièce a une forme creuse, les moyens de positionnement et d'application comprennent une pluralité de mors pouvant être mis, d'une part, dans une position retractée pour laquelle l'ensemble des mors présente un diamètre inférieur à celui de l'évidement de la deuxième pièce et, d'autre part, dans une position déployée pour laquelle ledit ensemble de mors présente un diamètre supérieur à celui dudit évidement.

L'ensemble de mors est lui-même monté mobile le long de l'axe dudit évidement, sur le bâti et il peut être déplacé par des moyens moteurs de manière à pouvoir être engagé dans ledit évidement de la deuxième pièce, et, après déploiement des mors, à être déplacé en sens inverse de manière à appliquer ladite deuxième pièce, avec contrainte, sur la première pièce, avant que l'opération de soudure soit réalisée.

D'autres caractéristiques et avantages de l'invention ressortiront de la description qui va suivre d'un mode de réalisation de l'invention, description faite en référence aux dessins annexés sur lesquels :
- la figure 1 est une vue partielle en coupe verticale d'un ensemble formé par une coupelle soudée sur une tôle ;
- la figure 2 est une vue en plan de la figure 1 ;
   la figure 3 est une vue en coupe verticale et en élevation des pièces des figures 1 et 2, non encore soudées, montées sur un dispositif d'assemblage selon un mode de réalisation de l'invention ;
- la figure 4 est une vue analogue à la figure 3, montrant en détail les moyens de centrage et d'application de la deuxième pièce sur la première ;
- la figure 5 est une vue de dessus selon le plan V-V de la figure 4 ; et
- la figure 6 est une vue partielle analogue de la figure 4 montrant les mors du dispositif de centrage en position déployée.

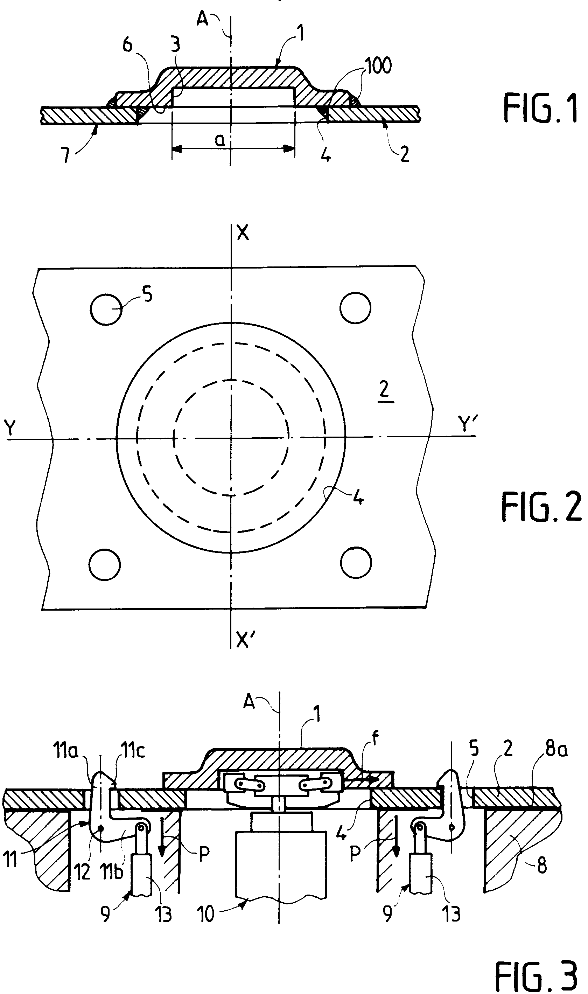

Comme on peut le voir sur les figures 1 et 2, l'une des pièces à assembler est une coupelle 1, tandis que l'autre pièce est une tôle plane 2.

La coupelle 1 présente un évidement axial de forme cylindrique de faible hauteur 3, et la tôle 2 est munie d'une ouverture circulaire centrale 4 de diamètre supérieur à celui de l'évidement 3 de la coupelle 1.

La tôle 2 comporte également quatre trous circulaires 5 disposés symétriquement par rapport à des axes X-X' et Y-Y' orthogonaux se coupant au centre du trou central 4.

La coupelle 1 est usinée aux tolérances finales d'assemblage, notamment en ce qui concerne le diamètre a de l'évidement 3, et sa face inférieure 6.

Il importe d'obtenir, après assemblage des pièces 1 et 2, les résultats suivants :
- concentricité des évidements 3 et 4 ;
- respect des tolérances sur le diamètre a ;
- planéité de la face inférieure 7 de la tôle 2.

Comme on peut le voir sur la figure 3, le dispositif d'assemblage qui y est représenté comprend un bâti 8 présentant une face supérieure plane 8a formant surface d'appui pour la tôle 2, quatre unités 9 de positionnement et de bridage de la tôle 2, et une unité spécifique 10 pour assurer la mise en tension de la coupelle 1, son centrage sur le trou 4 de la tôle 2 et son bridage sur cette tôle.

D'autres unités de maintien et de bridage non représentées sur les dessins peuvent éventuellement être ajoutées en fonction des dimensions de la tôle 2 et des équipements complémentaires pouvant y être fixés.

Sur la demi-vue de gauche de la figure 3, on a représenté les unités 9 et 10 en position d'attente. Sur la demi-vue de droite de cette figure 3, les unités 9 et 10 sont montrées en position de travail c'est-à-dire en position de centrage et de bridage des pièces 1 et 2 à assembler.

Chaque unité de positionnement et de bridage 9 se compose d'une griffe en forme de levier coudé 11 articulé en 12 sur le bâti, dont l'un des bras 11a présente une forme de crochet 11c, et dont le d'autre bras 11b est articulé par son extrémité libre à la tige d'un vérin 13 à double effets d'axe vertical, dont le carter est solidaire du bâti 8.

Les bras 11a des griffes 11 traversent chacun une ouverture circulaire 5 de la tôle 2 et dépassent de cette tôle par leurs extrémités formant crochet 11c.

Lorsque le vérin 13 se trouve en position contractée comme représenté sur la demi-vue de droite de la figure 3, l'extrémité en forme de crochet 11c de la griffe 11 applique sur la tôle 2 à l'endroit du trou 5, une contrainte tendant à appliquer cette tôle 2 contre la face supérieure plane 8a du bâti 8.

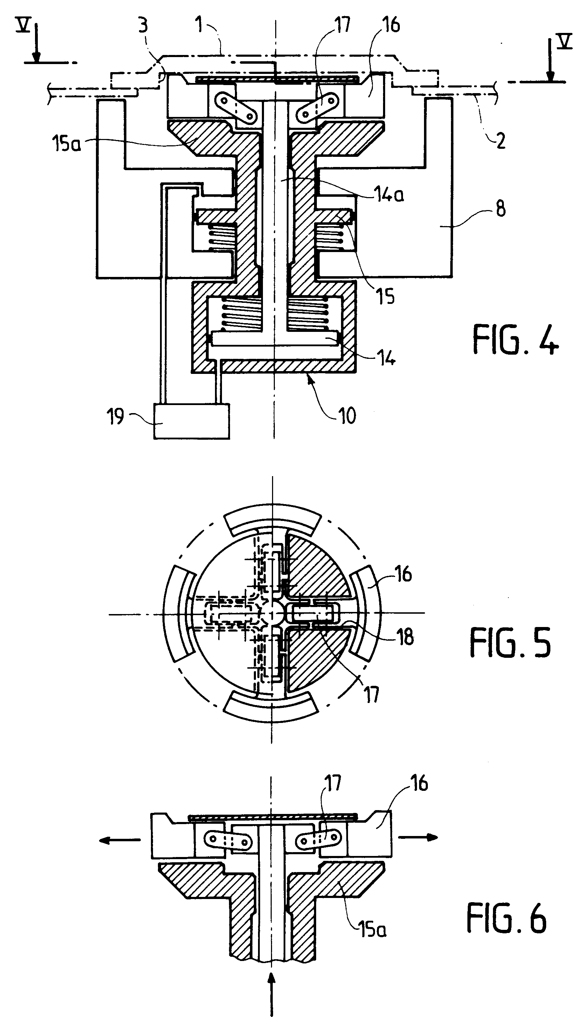

L'unité 10 de centrage et de mise en tension de la coupelle 1 est représentée plus en détail sur les figures 4 à 6.

Comme on peut le voir sur ces figures, cette unité comprend un système de deux vérins coaxiaux, imbriqués l'un dans l'autre 14, 15 montés sur le bâti fixe 8, quatre mors 16 et quatre biellettes 17 reliant chacune un mors 16 à la tige de l'un 14, des vérins 14, 15 précités.

Comme on peut le voir sur la figure 4, le vérin 14 agit par l'intermédiaire de sa tige 14a et les biellettes 17 sur les mors 16 qui sont chacun monté radialement coulissant le long d'une glissière radiale 18 ménagée dans le corps 15a du deuxième vérin 15.

Les vérins 14 et 15 peuvent être à simple effet et munis d'un ressort de rappel comme représenté, ou bien être à double effet.

Ces vérins 14, 15 sont alimentés en fluide sous-pression à partir d'une unité de commande de fluide 19 représentée schématiquement sur la figure 4 par un simple rectangle.

L'unité de commande 19 peut être soit manuelle et comprendre dans ce cas, au moins une vanne manuelle, soit automatique et comprendre des électrovannes pilotées de façon séquentielle par un automate.

Le fonctionnement du dispositif d'assemblage représenté aux figures 3 à 6 est le suivant :
- la tôle 2 est d'abord posée, positionnée et bridée sur la surface supérieure plane 8a du bâti 8 par l'action des unités 9 qui en outre appliquent avec précontrainte (pression P) la tôle 2 sur la surface 8a. Le bridage de la tôle 2 sur le bâti 8 se fait en quatre endroits matérialisés par les trous 5. Il y a donc maintien ferme non seulement de la forme plane de la tôle, mais aussi de ses dimensions radiales dans la zone située autour du trou central 4 ;
- la coupelle 1 est déposée sur l'unité 10, l'ensemble des mors 16 étant engagé dans l'évidement 3 de la coupelle 1.

Sous l'action du vérin 14, les quatres mors 16 s'écartent, centrant la coupelle 1 sur le trou 4 de la tôle 2 et développant sur le périmètre intérieur ou face intérieure de pourtour 3, des forces radiales f régulièrement réparties autour de l'axe A de la coupelle et d'intensité suffisante pour résister aux contraintes qui seront induites dans la paroi de la coupelle 1 lors de son sondage sur la tôle 2.

Ainsi saisie et contrainte, la coupelle 1 est alors appliquée avec précontrainte, par l'action du vérin 15, sur la tôle 2.

L'ensemble des pièces 1 et 2 est ainsi prêt pour l'opération de soudage, qui consiste par exemple à réaliser des cordons de soudure 100 entre les pièces 1 et 2 comme représenté sur la figure 1.

Grâce à ces précontraintes appliquées aux pièces 1 et 2 mises en place sur le dispositif d'assemblage selon l'invention avant l'opération de soudage, les déformations qui sont normalement engendrées par le soudage sont ainsi compensées et annulées.

## Revendications

**1 -** Procédé d'assemblage de deux pièces (1, 2) par soudure, caractérisé en ce que, pendant l'opération de soudage, on applique sur lesdites pièces des précontraintes tendant à les maintenir dans leur forme actuelle.

**2 -** Procédé selon la revendication 1, caractérisé en ce que durant l'opération de soudage, on applique l'une des pièces (2) avec précontrainte sur une paroi rigide et fixe de maintien (8) et on applique l'autre pièce (1) sur la première pièce (2) également avec précontrainte.

**3 -** Procédé selon la revendication 2, caractérisé en ce que dans le cas où la deuxième pièce (1) présente une forme creuse, on la centre sur la première pièce (2) en lui appliquant sur sa face interne de pourtour (3) des forces (f) régulièrement reparties autour de l'axe (A) de ladite pièce et dirigées radialement vers l'extérieur.

**4 -** Dispositif d'assemblage par soudure de deux pièces mettant en oeuvre le procédé selon l'une des revendications précédentes, caractérisé en ce qu'il comporte un bâti (8), des moyens de bridage avec précontrainte (9) de la première pièce (2) sur le bâti (8) et des moyens de centrage et d'application avec précontrainte (10) de la deuxième pièce (1) sur la première pièce (2).

**5 -** Dispositif selon la revendication 4, caractérisé en ce que les moyens de bridage (9) comprennent une pluralité de griffes (11) associées à des moyens moteur (9) pour coopérer avec des évidements (5) de la première pièce (2) pour appliquer cette dernière avec précontrainte (P) sur une surface de maintien (8a) du bâti (8).

**6 -** Dispositif selon l'une des revendications 4 et 5, caractérisé en ce que les moyens de centrage et d'application (10) comprennent une pluralité de mors (16) pouvant être mis, d'une part, dans une position rétractée pour laquelle l'ensemble desdits mors peut s'engager dans un évidement (3) de la deuxième pièce (1) à assembler et, d'autre part, dans une position déployée pour laquelle l'ensemble desdits mors (16) est appliqué avec précontrainte (f) contre la face interne de pourtour (3) dudit évidement de la deuxième pièce (1).

**7 -** Dispositif selon la revendication 6, caractérisé en ce que l'ensemble de mors (16) est monté mobile le long de l'axe (A) dudit évidement (3) de la deuxième pièce (1) sur le bâti (8), et il peut être déplacé le long dudit axe par des moyens moteur (14).
